# DEMANDE DE BREVET EUROPEEN

(11) **EP 1 312 626 A1**
(43) Date de publication de la demande: **21.05.2003**
(21) Numéro de dépôt: 02292272.8
(22) Date de dépôt: 17.09.2002
(51) Int. Cl.: C08F 214/18, C08F 234/02

(54) **Copolymère amorphe partiellement fluoré permettant la fabrication de matériaux conducteurs de la lumière**

(30) Priorité: 19.11.2001 FR 0114939
(71) Demandeur: Atofina, 92800 Puteaux (FR)
(72) Inventeur: Boutevin, Bernard, 34090 Montpellier (FR); Rousseau, Alain, 34090 Montpellier (FR); Sage, Jean-Marc, 69600 Oullins (FR)

(57) **Abrégé**

L'invention a pour objet un copolymère du carbonate de vinylène (VCA) ayant pour comonomère le chlorotrifluoroéthylène (CTFE) ou le tétrafluoroéthylène (TFE). Ce copolymère est transparent, permettant la réalisation d'objets servant de guide ou de conducteur de la lumière de longueurs d'ondes de type visible ou proche infra rouge. De plus, il présente une température de transition vitreuse supérieure à 60°C appropriée à la réalisation de fibres optiques.

## Description

La présente invention a pour objet un copolymère du carbonate de vinylène (VCA) ayant pour comonomère le chlorotrifluoroéthylène (CTFE) ou le tétrafluoroéthylène (TFE). Ce copolymère est transparent, permettant la réalisation d'objets servant de guide ou de conducteur de la lumière de longueurs d'ondes de type visible ou proche infra rouge. De plus, il présente une température de transition vitreuse supérieure à 60°C appropriée à la réalisation de fibres optiques.

Il est d'un grand intérêt de concevoir un matériau polymère possédant les propriétés nécessaires pour réaliser des fibres optiques. On pourra, à cet effet, se référer à l'article "Polymeric materials for Devices in Optical Fibre Systems" de Anthony R. Blythe et John R. Vinson (Polymers for advanced technologies vol 11, pages 601-611,2000).

Pour la fabrication de fibres optiques, on connaît déjà des polymères amorphes, perfluorés, dérivés de monomères cycliques perfluorés, présentant des températures de transition vitreuse supérieures à 100°C. Cependant, la synthèse de ces monomères cycliques perfluorés est délicate et longue (plusieurs étapes de synthèse). Elle nécessite l'emploi d'agents de fluoration dangereux limitant leur accessibilité et conduisant à des prix de revient du polymère très élevés. (voir "TEFLON® AF Amorphous Fluoropolymers" Paul R. RESNICK, Warren H. BUCK "Modern Fluoropolymers, pages 397-398, Ed. John Scheires 1997 John Wiley & Sons Ltd).

D'autre part, ces polymères fluorés sont difficilement solubles dans les solvants usuels ce qui implique l'utilisation de solvants fluorés avec les inconvénients que cela représente.

Les polymères d'entité répétitive -(CF₂-CFX)- dans laquelle X=F, Cl ou Br ont une température de transition vitreuse (Tg), température à partir de laquelle des mouvements limités des chaînes polymériques sont possibles, peu élevée. Leur Tg est proche de la température ambiante, ce qui ne permet pas d'assurer une parfaite stabilité des propriétés optiques dans les conditions thermiques ou climatiques d'utilisation des matériaux.

Il est également connu dans la littérature (M.Krebs et C. Schneider, Adv. Chem. Ser vol 142, pages 92 -98, 1975) un copolymère statistique issu de la copolymérisation du chlorotrifluoroéthylène (CTFE) et du carbonate de vinylène (VCA) de masse moléculaire (Mn) = 2000 se présentant sous forme d'un solide blanc incompatible avec une application optique.

Les matériaux fluorés développés jusqu'à présent font appel à des monomères ou des oligomères difficiles d'accès soit par le nombre d'étapes nécessaires pour leur synthèse soit par le danger qu'engendre l'utilisation d'agents de fluoration soit par leur prix. D'autre part, ces matériaux fluorés présentent une tenue thermomécanique insuffisante.

On voit donc qu'aucun matériau fluoré ou partiellement fluoré développé jusqu'à présent n'est pleinement satisfaisant.

Il a été trouvé par la demanderesse un copolymère incolore et transparent, soluble dans les solvants usuels (acétone, THF, acétate d'éthyle, entre autre), de température de transition vitreuse supérieure à 60°C, obtenu à partir de chlorotrifluoroéthylène ou de tétrafluoroéthylène, monomères fluorés industriels et de vinylène carbonate, monomère non halogéné facilement accessible. Ce copolymère présente les propriétés optiques et thermomécaniques requises pour des applications telles que :
- la fabrication d'articles conduisant la lumière, par exemple les fibres optiques ;
- la fabrication de revêtement ou films, par exemple antireflet ou encore ;
- la fabrication de photo masque.

L'invention a pour objet un copolymère comprenant au moins deux unités répétitives P1 et P2 de formules générales suivantes, i et j correspondant à un nombre répétitif d'unités : 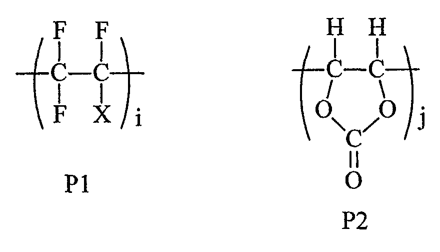 ledit copolymère étant transparent, de nature amorphe de masse moléculaire (Mn) comprise entre 5.10³ et 10⁵ et ayant une teneur en motif P2 comprise entre sensiblement 30 et 70 % molaire pour X=F ou Cl dans P1.

Selon un mode de réalisation dudit copolymère, sa température de transition vitreuse (Tg) est comprise entre 60°C et 160°C.

L'invention est également relative à un article fabriqué en un matériau comprenant un copolymère tel que décrit précédemment.

L'invention concerne une fibre optique à base de copolymère tel que décrit précédemment.

L'invention a pour objet l'utilisation du copolymère tel que décrit précédemment pour fabriquer des revêtements ou des films.

L'invention a pour objet l'utilisation du copolymère tel que décrit précédemment pour fabriquer des articles conduisant la lumière.

Le copolymère selon l'invention comprend les unités répétitives P1 et P2, représentées ci-dessous.

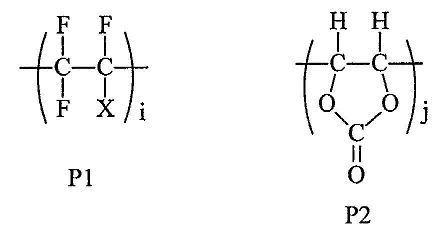

### P1 est issue de la polymérisation de i monomères M1 et P2 est issue de la polymérisation de j monomères M2.

Le monomère M1 est un monomère fluoré représenté par la formule générale suivante : CF₂=CFX, dans laquelle X est soit :
- un atome de fluor, en quel cas M1 est le tétrafluoroéthylène ;
- un atome de chlore, en quel cas M1 est le chlorotrifluoroéthylène.

Les entités répétitives P1 peuvent être issues d'un mélange de monomères de formule M1.

Le comonomère M2 donnant lieu aux entités répétitives P2 est le carbonate de vinylène de formule suivante:

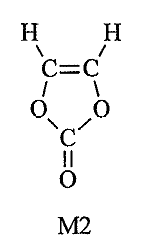

Comme procédé permettant d'obtenir le polymère, on peut utiliser tout procédé de polymérisation connu de l'homme de l'art utilisant un milieu solvant, en suspension dans l'eau ou en émulsion par exemple. On préfèrera généralement travailler en milieu solvant afin de contrôler l'exothermicité de la polymérisation et favoriser un mélange intime des différents monomères.

Parmi les solvants couramment utilisés, on peut citer l'acétate d'éthyle, de méthyle ou encore de butyle, les solvants chlorofluorés comme le F141b® (CFCl₂-CH₃) ou le F113® (CF₂Cl-CFCl₂).

Comme initiateur de polymérisation, on peut employer des générateurs de radicaux libres tels que les dérivés peroxydes, hydroperoxydes, percarbonate ou encore des composés azo comme l'azoisobutyronitrile (AIBN). On peut également, dans les cas de procédés menés en milieu aqueux, utiliser des générateurs de radicaux libres inorganiques comme les persulfates ou des combinaisons dites rédox.

La température de polymérisation est dictée, en général, par la vitesse de décomposition du système initiateur choisi et est, en général, située entre 0 et 200°C de préférence entre 40 et 120°C.

La pression est, en général, comprise entre la pression atmosphérique et une pression de 50 bars, plus particulièrement entre 2 bars et 20 bars.

Afin de mieux contrôler la composition du polymère, il est également possible d'introduire en tout ou partie les monomères ainsi que l'initiateur de polymérisation de façon continue ou par fraction au cours de la polymérisation.

Le copolymère selon l'invention possède une température de transition vitreuse (Tg) située entre 60 et 160°C, de préférence entre 80 et 140°C. Cette température de transition vitreuse est principalement liée à la teneur en motifs P2 présents dans le copolymère. La transparence du polymère obtenu dépend également de la teneur en motifs P2.

La teneur en motif P2, unité répétitive issue de la polymérisation de monomères M2, peut varier dans le copolymère en fonction de la nature de X de P1. Pour X=F ou Cl dans P1, la teneur en motif P2 dans le copolymère est comprise entre sensiblement 30 et 70 % molaire.

Sans porter préjudice à l'invention, on peut également introduire un troisième monomère lors de la polymérisation à condition que sa teneur reste inférieure à 15 % molaire dans le copolymère formé.

Le polymère selon l'invention a une masse moléculaire moyenne en nombre (Mn) comprise entre 500 et 10⁶ et de préférence entre 10⁴ et 10⁵.

Nous allons maintenant illustrer l'invention en présentant des exemples de réalisation de l'invention.

Les réactifs, initiateurs et solvants utilisés sont abrégés :
**CTFE** : chlorotrifluoroéthylène CF₂=CFCl
**TFE** : tétrafluoroéthylène CF₂=CF₂
**VCA :** carbonate de vinylène
**TBPP :** perpivalate de tertiobutyle, à 75 % en masse dans l'isododécane
**F141b**® : 1,1,1-dichlorofluoroéthane

Les Mn (masse moléculaire moyenne en nombre) sont déterminées par analyse CES (chromatographie d'exclusion stérique). On utilise un appareillage de la société Spectra Physic « Winner Station ». La détection est effectuée par indice de réfraction. La colonne est une colonne mixed C PL gel de 5 microns de la société Polymer Laboratory et le solvant utilisé est le THF à un débit de 0,8 ml/min. Les masses moléculaires en nombre (Mn) sont exprimées en g.moles⁻¹ par rapport à un standard polystyrène.

Les Tg (température de transition vitreuse) sont déterminées par calorimétrie différentielle à balayage (DSC en anglais). On effectue une première montée en température à 20°C par minute suivie d'un refroidissement puis une deuxième montée en température au cours de laquelle sont relevées les Tg (température de transition vitreuse) ou les Tf (température de fusion). La plage de température est de 50°C à 200°C si la Tg est supérieure à 60°C.

Les taux de chlore sont déterminés de façon classique par minéralisation en bombe de PARR avec Na₂O₂ puis dosage des chlorures par argentimétrie.

### Exemple 1

### [M1/M2 : CTFE/VCA]

On opère dans un réacteur en acier inoxydable de 160 ml, purgé deux à trois fois avec 5 bars d'azote. On introduit par aspiration dans le réacteur sous vide (environ 100 mbars de pression), 50 ml d'une solution de F141b® contenant 0,6 ml (soit 2,25 mmoles) d'initiateur TBPP et 8,53 g (soit 99 mmoles) de VCA. On introduit ensuite 11 g (soit 94,5 mmoles) de CTFE. Le milieu réactionnel est chauffé à 80°C pendant 2h30 sous agitation avec une pression initiale d'environ 10 bars. Après réaction, le contenu de l'autoclave est évaporé partiellement, précipité à l'heptane puis séché sous vide.

On obtient ainsi 16,2 g de copolymère soluble dans les solvants usuels (acétone, THF). Les analyses réalisées sur le copolymère obtenu dans l'exemple 1 indiquent un rapport molaire P1/P2 de 47/53, une Mn de 7400 et une Tg de 120°C. Par mise en solution dans l'acétate d'éthyle et évaporation, on obtient un film incolore transparent.

### Exemple 2

### [M1/M2 : CTFE/VCA]

On opère de la même manière que dans l'exemple 1 avec les mêmes réactifs et les mêmes proportions en employant le solvant acétate d'éthyle à la place du F141b®. En fin de réaction, on obtient une solution de polymère dans l'acétate d'éthyle. Le solvant est évaporé jusqu'à obtenir un volume d'environ 20 ml puis on précipite le produit de la réaction au n-heptane. Le polymère précipité est filtré puis séché sous vide à 60°C. On obtient 10 g d'un copolymère incolore, transparent, soluble dans le THF ou l'acétone. Le rapport molaire P1/P2 est de 49/51 et laTg de 106°C.

On prélève 1g de ce copolymère que l'on met en solution dans 3 ml d'acétate d'éthyle. La solution ainsi obtenue est parfaitement limpide. On dépose cette solution dans un cristallisoir plat de 7 cm de diamètre et on laisse évaporer le solvant pendant 3 jours à température et atmosphère ambiantes. Le film ainsi obtenu est parfaitement transparent et limpide.

On réalise des comparatifs 3, 5, 6 et 7 ainsi qu'un exemple 4 en opérant de la même manière qu'à l'exemple 2 avec les quantités de réactifs CTFE et VCA indiquées dans le TABLEAU 1 ci-après.

Dans les exemples et comparatifs du TABLEAU 1 sont mis en jeu au début de la réaction x mmoles de CTFE et y mmoles de VCA, tel que : Comparatif 5 : x = 181 et y = 10,5 ; Comparatif 3 : x = 186 et y = 40 ; Exemple 2 : x = 95 et y = 98 ; Exemple 1 : x = 94,5 et y = 99 ; Exemple 4 : x = 86 et y = 174 ; Comparatif 6 : x = 43 et y = 174 ; Comparatif 7 : x = 0 et y = 180.

Les rapports molaires P1/P2, le rendement de polymère obtenu en % molaire, l'aspect de la solution de polymère obtenue à l'issu de la réaction de polymérisation de M1 et M2 et l'aspect du film dudit polymère sont reportés dans le TABLEAU 1 pour les exemples 1, 2 et 4 et les comparatifs 3 et 5 à 7.

**TABLEAU 1**

| | Rapport molaire P1/P2 (1) | Rendement en % | Aspect de la solution (2) | Observations concernant le film obtenu |
|---|---|---|---|---|
| Comparatif 5 | 95/5 | 5 % | limpide | opalescent |
| Comparatif 3 | 85/15 | 28 % | limpide | Transparent Tg <50°C |
| Exemple 2 | 49/51 | 51 % | limpide | Transparent Tg 106°C |
| Exemple 1 | 47/53 | # | limpide | Transparent Tg 120°C |
| Exemple 4 | 33/67 | 49 % | limpide | Transparent |
| Comparatif 6 | 20/80 | 60 % | Présence importante d'insolubles | Transparent + insolubles opaques |
| Comparatif 7 | 0/100 | 70 % | Présence d'insolubles | Insolubles opaques |

| | | | | |
|---|---|---|---|---|
| (1) P1 ayant pour monomère M1 = CTFE ; P2 ayant pour monomère M2 = VCA. | | | | |
| (2) solution : 1g de polymère dans 3 ml d'acétate d'éthyle. | | | | |

On constate que pour les exemples 1, 2 et 4 comprenant des rapports molaires P1/P2 compris entre sensiblement 70/30 et 30/70 avec M1 = CTFE et M2 = VCA, la solution de copolymère obtenu est limpide et le film de copolymère obtenu après évaporation du solvant de ladite solution est un solide transparent. On constate que dans le cas des comparatifs 3, 5, 6 et 7, comprenant des rapports molaires P1/P2 situés en dehors de la plage citée précédemment, le film de copolymère est un solide non transparent.

### Exemple 8

### [M1/M2 : TFE/VCA]

On opère de la même manière qu'à l'exemple 2 mais avec 7 g (soit 81,3 mmoles) de VCA et 11 g (soit 110 mmoles) de TFE à la place du CTFE. On obtient 14,6 g de copolymère. Le copolymère est très soluble dans l'acétone ou le THF. Par évaporation de l'acétone, on obtient un film incolore, transparent. L'analyse RMN 19F indique un rapport molaire P1/P2 de 70/30. La Tg du copolymère est de 82°C (analyse DSC).

D'autres essais ont également été menés avec M1 = TFE et M2 = VCA. On a pu constater que pour des rapports molaires P1/P2 compris entre sensiblement 70/30 et 30/70, on obtenait des films de copolymères sensiblement transparents.

## Revendications

1. Copolymère comprenant au moins deux unités répétitives P1 et P2 de formules générales suivantes, i et j correspondant à un nombre répétitif d'unités : 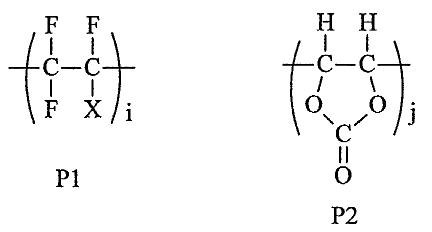 ledit copolymère étant transparent, de nature amorphe, de masse moléculaire (Mn) comprise entre 5.10³ et 10⁵ et ayant une teneur en motif P2 comprise entre sensiblement 30 et 70 % molaire pour X=F ou Cl dans P1.

2. Copolymère selon la revendication 1, **caractérisé en ce que** sa température de transition vitreuse (Tg) est comprise entre 60°C et 160°C.

3. Article fabriqué en un matériau comprenant un copolymère selon l'une quelconque des revendications précédentes.

4. Fibre optique à base de copolymère selon l'une quelconque des revendications 1 à 2.

5. Utilisation du copolymère selon l'une quelconque des revendications 1 à 2 pour fabriquer des revêtement ou des films.

6. Utilisation du copolymère selon l'une quelconque des revendications 1 à 2 pour fabriquer des articles conduisant la lumière.
